# EUROPEAN PATENT SPECIFICATION

(11) **EP 3 103 677 B1**
(45) Date of publication and mention of the grant of the patent: **02.09.2020**
(21) Application number: 16275081.4
(22) Date of filing: 06.06.2016
(51) Int. Cl.: B61D 33/00, B60N 2/34, B61D 31/00

(54) **CONVERTIBLE SEATING ARRANGEMENT**
UMWANDELBARE SITZANORDNUNG
AGENCEMENT DE SIÈGE CONVERTIBLE

(30) Priority: 12.06.2015 GB 201510320
(43) Date of publication of application: 14.12.2016
(73) Proprietor: Belfield Furnishings Ltd, Ilkeston DE7 5EP (GB)
(72) Inventor: Leary, Peter Thomas, Ilkeston DE7 5EP (GB); Singer, Nigel, Ilkeston DE7 5EP (GB)
(74) Representative: Potter Clarkson

(56) References cited:
- WO-A1-2011/154638
- DE-A1- 4 214 832
- DE-U1-202008 000 221
- GB-A- 203 884

## Description

This invention relates to a convertible seating arrangement for a vehicle. In particular, it relates to a convertible seating arrangement for a vehicle which can be converted between a first seating mode and a second mode suitable for provision of a sleeping surface. The invention also relates to a vehicle including a convertible seating arrangement as described herein.

Convertible seating arrangements are used in vehicles in order to provide multiple provisions to their users. Such provisions may include a sitting provision and another provision requiring a larger flat surface than those provided by the individual seating provisions, such as a sleeping provision. In the prior art it has been common practice to provide a first support element along one length or side of the vehicle and a second support element along the opposing length or side of the vehicle. When in a seating configuration, a first seat squab and first back rest squab are provided along the length of the first support element and a second seat squab and second back rest squab are provided along the length of the second support element. Typically, in order to provide the sleeping provision, a third support element is disposed between the first and second support elements and one or more of the back rest squabs are used in order to provide a suitable cushioned surface over the third support element and between the first and second seat squabs.

DE 202008000221 U1 discloses a seating apparatus for the living area of a caravan.

The convertible seating arrangement according to the invention is convertible between a first mode and a second mode, the arrangement comprising a first support element and a second support element arranged to define a space therebetween, a first seat squab and a second seat squab, and wherein at least the first seat squab comprises two parts formed by a split through a plane of the first seat squab, the two parts comprising an upper first seat squab and a lower first seat squab, wherein;

in the first mode, comprising a seating mode, the first and second seat squabs are configured to be arranged on the first and second support elements respectively to define two, facing seating areas; and

in the second mode, a third support element is provided to extend in the space between the first and second support elements and define therewith a continuous support surface, wherein the upper first seat squab, the lower first seat squab and the second seat squab are arranged to cover the first, second and third support elements of the support surface for provision of a sleeping surface.

This is advantageous as the different modes can be provided by the provision of the in-plane split first seat squab, rather than relying upon specifically sized back rest squabs. This also advantageously allows for more varied back rest squabs in terms of height, depth, firmness, cover material and filling material, amongst others.

The third support element may be retractable such that it retracts within the first support element, the second support element or an alternative storage unit. The three squabs available for covering the support surface may be placed in any particular order, although the upper first seat squab may be arranged to cover the first support structure, the lower first seat squab may be arranged to cover the third support structure and the second seat squab may be arranged to cover the second support structure.

The second seat squab may comprise two parts formed by a split through a plane of the second seat squab, the two parts comprising an upper second seat squab and a lower second seat squab, wherein, in the second mode, the upper first seat squab, the upper second seat squab, the lower first seat squab and the lower second seat squab may be configured to be arranged to cover the first, second and third support elements of the support surface, wherein two of the four seat squabs may be placed together on top of one another for provision of the sleeping surface. Thus, two of the squabs placed together face to face are arranged coplanar with the other two squabs to provide the substantially flat sleeping surface.

In the first mode, the arrangement may include a first back rest squab associated with the first seat squab and arranged to form a back rest therefor; and
the arrangement may include a second back rest squab associated with the second seat squab and arranged to form a back rest therefor; and
in the second mode, the first and second back rest seat squabs may be absent from covering the support surface for providing the sleeping surface.

The height of the first and/or second back rest squab may be greater than or less than half depth of seat squab. The depth (squab thickness) of the back rest squab may be greater than or less than the depth of the first seat squab and/or the second seat squab. This freedom is a particular advantage which is not possible in the prior art since the back rest is otherwise required to fill the gap between the first and second support elements.

The first back rest squab and/or the second back rest squab may be configured and arranged to substantially extend across a width of their associated seat squab and the or each back rest squab is of two or more separate sections. This is advantageous as rather than comprising a single length, the back rest may be of multiple sections as it is no longer required to form part of the sleeping surface.

The first seat squab may be configured such that the upper and lower first seat squabs are of different thicknesses and the second seat squab may be configured such that the upper and lower second seat squabs are of different thicknesses, the thicknesses such that a combination of two of the four seat squabs and the remaining two seat squabs provide, when placed adjacent one another on the first, second and third support elements form a substantially flat sleeping surface.

The lower first seat squab and the lower second seat squab may be configured to be placed on the support surface in combination, with the upper first seat squab and the upper second seat squab arranged to cover the remainder of the support surface.

The upper first seat squab and/or the upper second seat squab may have two major surfaces arranged opposite one another and wherein, in the first mode, one of the major surfaces may be arranged as an upward facing surface and, in the second mode, the other of the major surfaces may be arranged as an upward facing surface. The surfaces of the squabs between the first and second major surfaces comprise side surfaces.

With the first and second seat squabs arranged in the first seating mode, an upper surface of the first and second seat squabs may be covered by a first material covering and a lower surface of the first and second seat squabs may be covered by a second material covering different to the first material covering. The second material may comprise a multi-layer material comprising at least a non-woven material layer, such as felt, and a mesh layer atop said non-woven material layer.

The or each lower seat squab may be covered at least in part by the second material covering and wherein the surfaces covered in the second material covering may be configured to form an upward facing surface of the squabs in the second mode.

The first and/or second seat squab may include a knee roll at an edge of the associated seat squab adjacent the space when said seat squab is arranged in accordance with the first mode and;
when arranged in the second mode, said knee roll may be arranged at an outer edge of the support surface.

The knee roll may comprise a downturned edge of the substantially planar first and second seat squabs, such as the first and/or second upper seat squabs.

The first back rest squab and/or the second back rest squab may be configured and arranged to substantially extend across a width of their associated first and second seat squabs and wherein the or each back rest squab may comprise a plurality of scatter cushions.

The or each back rest squab may have a softer or harder bulk resilience than said first and/or second seat squabs. The softer or harder bulk resilience may be a result of a different quantity of stuffing material as compared to the first and/or second seat squabs. The softer or harder bulk resilience may be a result of a different stuffing material

According to a further aspect of the invention we provide a vehicle including the convertible seating arrangement according to the first aspect. The vehicle may comprise any one of a motorhome, a caravan, a boat, an aircraft, a van and a sports utility vehicle.

There now follows, by way of example only, a detailed description of embodiments of the invention with reference to the following figures, in which:
Figure 1 shows a vehicle having an example of a convertible seating arrangement for a vehicle;
Figures 2a and 2b show an example of a convertible seating arrangement for a vehicle in a first configuration and a second configuration, respectively;
Figure 3 shows an example of a first seat squab and a first back rest squab;
Figure 4 shows a further example of a first seat squab and a first back rest squab; and
Figures 5a and 5b show a further example of a convertible seating arrangement for a vehicle in a first configuration and a second configuration, respectively.

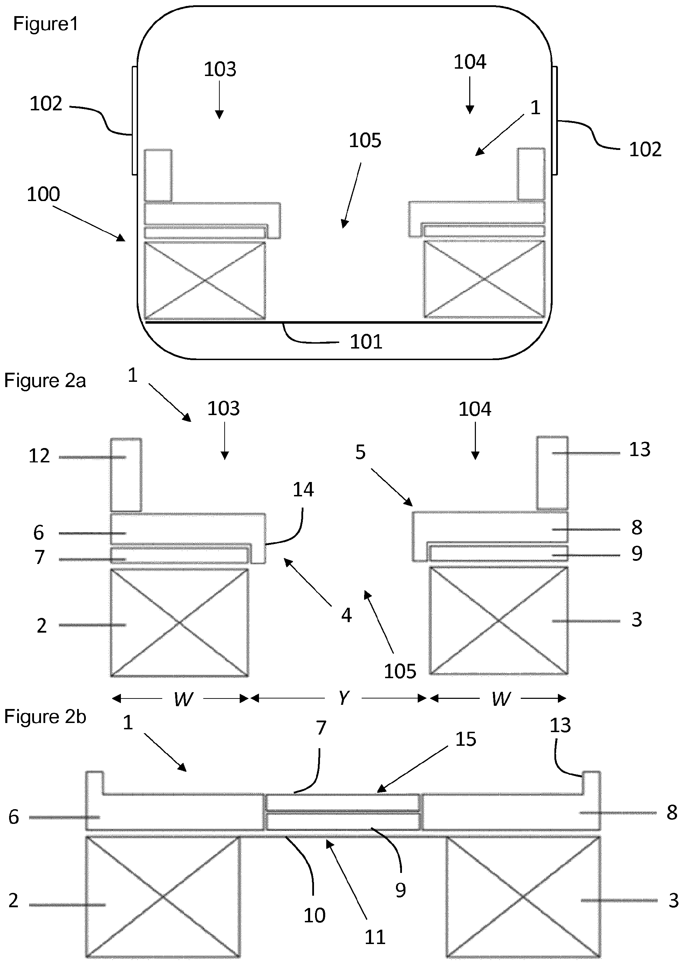

The space limitations of vehicles which are configured to provide accommodation in addition to transportation necessitate the use of certain articles of furniture for more than one purpose. In particular, a seating area may be converted into an area for a second purpose, such as a sleeping area. Figure 1 shows a cross-section through a vehicle 100 and an example of a convertible or reconfigurable seating arrangement 1 therein. The reconfigurable seating arrangement 1 may be arranged on the floor 101 of the vehicle 100 and between and against opposed inner side walls of the vehicle 100. This example shows a first bench seat 103 and a second opposed bench seat 104 facing the first bench seat, each bench seat 103, 104 arranged to abut opposed side walls of the vehicle and to be separated by a gap 105. The bench seats 103, 104 may extend over a portion of the length of the vehicle 100. The height of the reconfigurable seating arrangement 1, when in a seating configuration, may be such that the back rests extend to a point below side windows 102 of the vehicle 100. Alternatively, the back rests of the reconfigurable seating arrangement 1 may extend such that they block a portion of the side windows 102. Alternatively, the vehicle 100 may not have side windows 102. Further, while the seating arrangement 1 of this example is arranged between side walls of a vehicle, it could be arranged elsewhere depending on the internal layout of the vehicle, such as oriented front to back of the vehicle rather than between the vehicle's sides.

The convertible seating arrangement 1, is reconfigurable between at least two modes, for example: a first mode and a second mode. A first, seating mode may comprise two opposing seats 103, 104 suitable for a person to sit on either side of the vehicle and having a foot well 105 therebetween. In some examples, a removable table may be provided between the seats. In a second mode, the convertible seating arrangement 1 provides for a bed. The seating arrangement 1 may be comprised of a plurality of squabs. Squabs may be: a padded portion of a seat, such as that on which one might sit; a padded back rest; the padded arms of a seat; or another padded portion. In general, squabs comprise substantially planar padded cushions for making up a seating or sleeping area.

Figures 2a and 2b show an example convertible seating arrangement 1 for the vehicle 100, the arrangement 1 convertible between a first mode and a second mode, the arrangement 1 comprising a first support element 2 and a second support element 3 arranged to define a space 105 therebetween, which may comprise a foot well. A first seat squab 4 and a second seat squab 5 are provided, and at least the first seat squab 4 comprises two parts formed by a split through a plane of the first seat squab 4, the two parts comprising an upper first seat squab 6 and a lower first seat squab 7. In this example the second seat squab 5 is also of two parts comprising an upper second seat squab 8 and a lower second seat squab 9. In the first mode, comprising a seating mode, the first and second seat squabs 4, 5 are configured to be arranged on the first and second support elements 2, 3 respectively to define two facing seating areas comprising benches 103, 104. In the second mode, a third support element 10 is provided to extend in the space 105 between the first and second support elements 2, 3 and define therewith a continuous support surface 11, wherein the upper first seat squab 6, the lower first seat squab 7 and the second seat squab 5 are arranged to cover the first, second and third support elements 2, 3, 10 of the support surface 11 for provision of a sleeping surface 15. In this example, a combination of the lower first seat squab 7 and the lower second seat squab 9 are arranged together on top of one another to provide a subsection of the sleeping surface 15.

Conversion between modes can be performed in a variety of manners. In a first embodiment, conversion could be carried out manually by a user moving squabs 4, 5 into the required positions for the desired mode. In a second embodiment, the seating arrangement 1 may comprise a controller which allows the arrangement to reconfigure itself automatically into a desired mode upon receiving an input. In an arrangement wherein automatic configuration is possible, mechanisms may be provided for each of the squabs 4, 5 which require moving in order to carry out the reconfiguration.

In this example, the first and second support elements 2, 3 are of substantially of the same height. Alternatively, the first and second support elements 2, 3 may be of different heights. The first and second support elements 2, 3 provide a surface above and spaced from the floor 101. The support elements comprise box sections but may comprise planar surfaces cantilevered from the sides of the vehicle or a frame. The first and second support elements 2, 3 may comprise one or more storage areas within them. For example these storage elements 2, 3 may comprise cupboards, drawers or open shelves. The first and second support elements 2, 3 may comprise storage for the third support element 10. However, in this example, the third support element 10 is stowed in a storage element between the support elements 2, 3. The first and second support elements 2, 3 are of suitable materials for supporting the weight of one or more persons and are thus rigid. Examples of such materials include wood, aluminium, steel or rigid plastic.

The third support element 10, in this example, comprises a plurality of first slats that substantially extend across the space 105 between the first and second support elements 2, 3. The third support element 10 may be a single rigid member. Second slats may be provided that extend perpendicular to the first slats, supported by the first slats extending across the space between the first and second support elements 2, 3. The slats extend across the space 105 between the support elements. Where slats are being used, a flexible material or fabric may connect the slats in a spaced configuration for easy handling. Opposed ends of the slats rest on the first and second support elements but in other examples they may be received within a track. The third support structure may extend solely between the support elements. In another embodiment, the third support member may be configured to rest over at least a portion of, or across the whole surface of, the first and second support elements 2, 3. The third support element 10 may be foldable such as in a concertina arrangement for storage. The third support element 10 may have an alternative usage when not configured in the second mode, such as a table.

The space 105 between the first seating portion and the second seating portion provides a walkway or foot well when the reconfigurable seating arrangement 1 is in the first mode. The space 105 between the first and second support elements may be substantially the same width *W* as each of the first and second support elements 2, 3. In another embodiment, the space 105 between the first and second support elements may have a width greater than the width of either of the first or second seating portions Y.

The seat squabs 4, 5 provide, in the first configuration, a surface for a person to sit on. When in the first mode the seat squabs 4, 5 extend substantially along the length (into the page in figures 2a, 2b) of the first and or second support elements 2, 3. The arrangement 1 further includes back rest squabs 12, 13 which may be arranged against the internal wall of the vehicle 100 when the reconfigurable seating arrangement 1 is in a first mode. As is conventional, the first back rest squab 12 sits on the first seat squab 4 towards a back edge thereof. Likewise, the second back rest squab 13 sits on the second seat squab 5 towards the back edge thereof.

The seat squabs 4, 5 are substantially flat cushions extending in a plane and having a thickness to provide padding for a user when in use. The seat squabs 4, 5 are split in said plane to provide the upper 6, 8 and lower 7, 9 seat squabs. Thus, in the first mode the first seat squab 4 is arranged with its upper seat squab 6 lying atop and parallel with the lower seat squab 7 and substantially aligned therewith. Likewise in the first mode the second seat squab 5 is arranged with its upper seat squab 8 lying atop and parallel with the lower sweat squab 9 and substantially aligned therewith.

Figure 2b shows the second mode, which in this example comprises a sleeping mode. The upper first seat squab 6, the upper second seat squab 8, the lower first seat squab 7 and the lower second seat squab 9 are configured to be arranged to cover the first, second and third support elements 2, 3, 10 of the support surface 11, wherein two of the four seat squabs 6, 7, 8, 9 are placed together on top of one another for provision of the sleeping surface 15. In this embodiment, the upper seat squabs 6, 8 and the lower seat squabs 7, 9 have different thicknesses to one another, such that when the lower seat squabs 7, 9 of the first and second seat squabs 4, 5 are placed on top of one another, they provide a depth substantially equal to the depth of each of the upper seat squabs 6, 8 individually. This advantageously provides a substantially planar sleeping surface 15 to provide the provision of a bed. In an embodiment wherein each of the first, second and third support elements 2, 3, 10 are arranged at equal heights, the upper first seat squab 6, the upper second seat squab 8 and the combination of the lower first seat squab 7 and the lower second seat squab 9 may be arranged in any order over the first, second and third support elements 2, 3, 10 in a coplanar configuration. In this example, each of the upper seat squabs 6, 8 are arranged predominantly over the first and second support element 2, 3 and the combination of the lower first seat squab 7 and the lower second seat squab 9 is arranged on the third support element 10.

In an alternative embodiment, if the upper surface of the third support element 10 is disposed at a vertical position lower than the upper surface of each of the first and second support elements 2, 3 then the depth of each of the lower seat squabs 7, 9 may be configured such that, when arranged on top of one another on the third support element 10, they provide an upper surface 15 which is then planar with each of the upper seat squabs 6, 8 when arranged on the first and second support elements 2, 3.

Both the upper first seat squab 6 and/or the upper second seat squab 8 have two major surfaces arranged opposite each other. When in the first mode the first major surface faces upward in order to provide a seat surface. When in the second mode the second major surface faces upward in order to provide a sleeping surface. In this example, when in the first mode the sleeping surfaces of the first and second upper seat squabs 6, 8 are in contact with their respective lower seat squabs 7, 9. When in the second mode, the seat surfaces of the upper first and second seat squabs 6, 8 are in contact with their respective support elements 2, 3. In this example, the seat surface is of a different material to the sleeping surface. This is beneficial as the seat surfaces provide attractive upholstery for the user whereas the sleeping surfaces provide breathable material such as a multilayer material. In this case, the multilayer material is a mesh layer atop a non-woven material, such as felt. The surfaces of the lower first and lower second seat squabs 7, 9 are also covered in the same material as the sleeping surface of the upper first and upper second seat squabs 6, 8. It will be appreciated that only a single major surface of one of the lower seat squabs 7, 9 is required to be of the same material as the sleeping surface in order to provide the user with a suitable sleeping surface.

The first and second back rest squabs 12, 13 are arranged on or behind the first and second seat squabs 4, 5 in order to provide back support for one or more persons when the convertible seating arrangement 1 is in the first mode. In the second mode, the back rest squabs 12, 13 are not required to form the sleeping area and are therefore absent from the convertible seating arrangement 1.

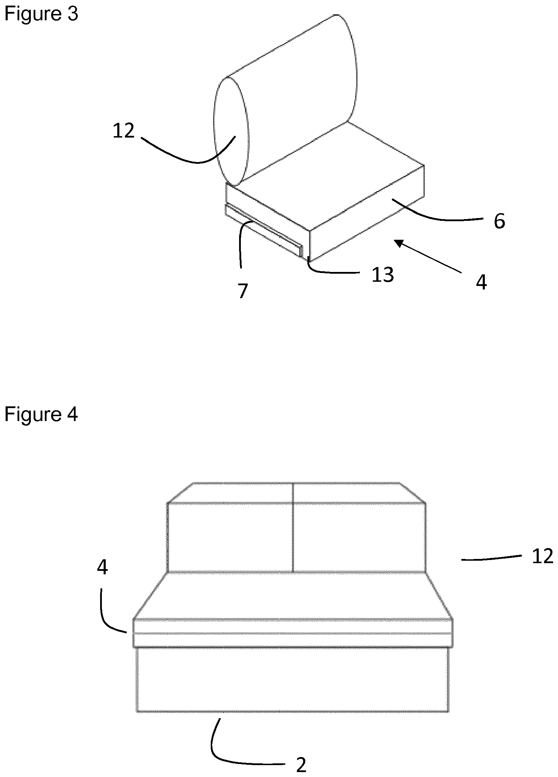

Figure 3 shows a further example of the back rest squabs 12, 13 having different cross sectional shapes to the seat squabs 4, 5, for example an elliptical cross section. In another embodiment, one or both of the back rest squabs 12, 13 may provide one or more pillows for use when in the sleeping mode. The height of the back rest squabs 12, 13 may be greater or less than half of the depth of the seat squab 4, 5. This gives designers more flexibility for providing comfortable seating to the user. The back rest squab 12, 13 may be of a different material to its respective seat squab 4, 5. The first and/or second back rest squabs 12, 13 may have a harder or softer bulk resilience than the first and/or second seat squabs 4, 5. Thus, the back rest squabs 12, 13 may comprise a different filling material to the seat squabs or may be stuffed or filled to a different degree. It will be appreciated that, in this context, the phrase bulk resilience refers to the resistance to deformation of a squab, 4, 5, 6, 7, 8, 9, 12 upon the application of pressure, by the overall bulk. For example, a squab 4, 5, 6, 7, 8, 9, 12 with a low bulk resilience will deform more when pressure is applied than one with a high bulk resilience. Thus the bulk resilience is the softness or hardness when sitting on or leaning against a squab 4, 5, 6, 7, 8, 9, 12. In one embodiment the first back rest squab 12 and the second back rest squab 13 may be configured to substantially extend across the width of their associated seat squab 4, 5.

Figure 4 shows a further embodiment wherein the back rest squab 12 is of two or more separate sections. The first back rest squab 12 and/or the second back rest squab 13 may comprise a plurality of scatter cushions.

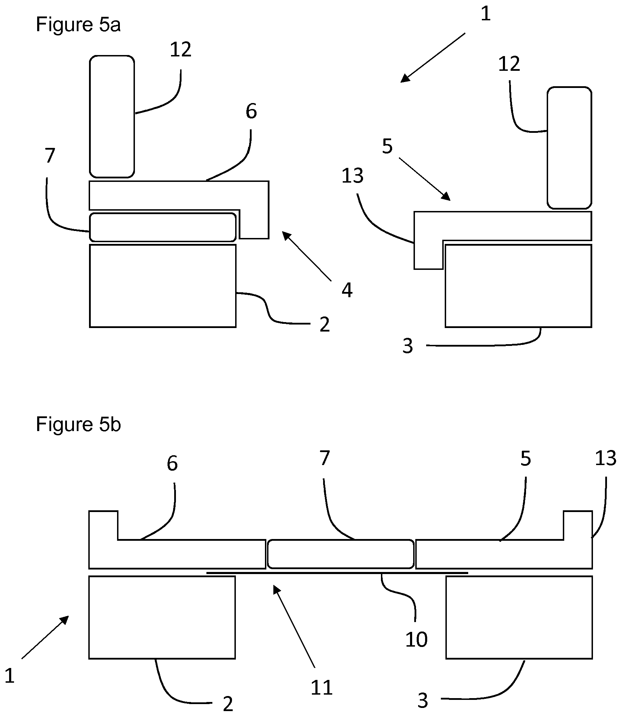

The first seat squab 4 and/or the second seat squab 5 may comprise a knee roll 14 at an edge of the associated seat squab 4, 5 adjacent the space 105 when said seat squabs 4, 5 are arranged in accordance with the first mode. When arranged in the second mode, said knee roll 14 is arranged at an outer edge of the support element 2, 3. The knee roll 14 comprises a turned down portion of the squab 4, 5 which extends substantially perpendicular to the remainder of the seat squab 4, 5. In this example the upper seat squabs 6, 8 include the knee roll 14 and the lower seat squabs do not include a knee roll. When arranged in the first mode, the knee roll 14 of an upper seat squab 6, 8 may extend along the front side edge of its respective lower seat squab 7, 9, as shown in figures 2a and 5a. The knee roll 14 may extend over a portion of the front edge of its respective support element 2, 3 when arranged in the first mode. In this example, the knee roll 14 obscures the split between the upper 6, 8 and lower 7, 9 squabs from view when in the first mode. The knee roll 14 may have a different bulk resilience to that of the remainder of its respective seat squab 4, 5. Figure 4 shows a further embodiment wherein the knee roll is not present and so does not obscure the split in the seat squab 4.

Squabs 4, 5, 6, 7, 8, 9, 12 which are configured to be in contact with one another in either of the first or second mode may be configured to be secured to one another when in at least one mode. In one embodiment, either of the first or second upper seat squabs 6, 8 may be configured to be secured to its respective lower seat squab 7, 9. A back rest squab 12, 13 may be configured to be secured to its respective seat squab 4, 5. Squabs 4, 5, 6, 7, 8, 9, 12 may be secured to each other by a number of methods such as by hook and loop fasteners, snap fasteners, buttons or other suitable means. Alternatively, the friction between the materials of a first squab and a second squab may hold the squabs together under normal use. Providing a means for securing squabs 4, 5, 6, 7, 8, 9, 12 together is advantageous as it prevents the squabs from slipping over each other during normal use.

Figures 5a and 5b show a further example wherein only the first seat squab 4 comprises an upper seat squab 6 and a lower seat squab 7 and the second seat squab 5 is of a single squab, the depth of each of the upper first seat squab 6 and the lower first seat 7 squab may be substantially equal to one another and further equal to the second seat squab 5. In this embodiment, the first and second support elements 2, 3 are of the same height. The result of this is that, when in the seating mode, the first seating portion may be raised higher than the second seating portion. This embodiment provides an adult's seating portion and a child's seating portion, although it will be appreciated that alternative uses for such an arrangement are conceivable. In the second mode of this embodiment, a third support element 10 may extend between the first and second support elements 2, 3 to provide a substantially continuous surface 15 therebetween. The upper first seat squab 6, the lower first seat squab 7 and the second seat squab 5 may then be arranged to cover the first, second and third support elements 2, 3, 10. In this example, the first upper seat squab 6 and the second seat squab 5 is arranged to cover the first and second support element 2, 3 and the first lower seat squab 7 is arranged to cover the third support element 10.

The vehicle 100 in this example comprises a caravan. However, the vehicle may comprise a variety of types of vehicle 100 including automotive vehicles, nautical vehicles, aeronautical vehicles or rail vehicles. Some examples may include, but are not limited to: caravans; motor homes; train carriages; boats; canal boats; aircrafts; or sports utility vehicles.

## Claims

1. A convertible seating arrangement (1) for a vehicle, the arrangement convertible between a first mode and a second mode, the arrangement comprising a first support element (2) and a second support element (3) arranged to define a space (105) therebetween, a first seat squab (4) and a second seat squab (5), and wherein the first seat squab (4) comprises two parts formed by a split through a plane of the first seat squab (4), the two parts comprising an upper first seat squab (6) and a lower first seat squab (7), and wherein the second seat squab (5) comprises two parts formed by a split through a plane of the second seat squab (5), the two parts comprising an upper second seat squab (8) and a lower second seat squab (9), wherein;
in the first mode, comprising a seating mode, the first and second seat squabs (5), (6) are configured to be arranged on the first and second support elements (2), (3) respectively to define two, facing seating areas; and
in the second mode, a third support element (10) is provided to extend in the space (105) between the first and second support elements (2), (3) and define therewith a continuous support surface (11), wherein the upper first seat squab (6), the upper second seat squab (8), the lower first seat squab (7) and the lower second seat squab (9) are configured to be arranged to cover the first, second and third support elements (2), (3), (10) of the support surface (11), wherein two of the four seat squabs are placed together on top of one another for provision of a sleeping surface.

2. A convertible seating arrangement (1) according to claim 1, in which, in the first mode, the arrangement includes a first back rest squab (12) associated with the first seat squab (4) and arranged to form a back rest therefor; and
the arrangement includes a second back rest squab (13) associated with the second seat squab (5) and arranged to form a back rest therefor; and
in the second mode, the first and second back rest seat squabs (12), (13) are absent from covering the support surface (11) for providing the sleeping surface.

3. A convertible seating arrangement (1) according to claim 2, in which the first back rest squab (12) and/or the second back rest squab (13) are configured and arranged to substantially extend across a width of their associated seat squab (4), (5) and wherein the or each back rest squab (12), (13) is of two or more separate sections.

4. A convertible seating arrangement (1) according to claim 1, in which the first seat squab (4) is configured such that the upper and lower first seat squabs (6), (7) are of different thicknesses and the second seat squab (5) is configured such that the upper and lower second seat squabs (8), (9) are of different thicknesses, the thicknesses such that a combination of two of the four seat squabs and the remaining two seat squabs provide, when placed on the first, second and third support elements (2), (3), (10), a substantially flat sleeping surface.

5. A convertible seating arrangement (1) according to any preceding claim, in which the lower first seat squab (7) and the lower second seat squab (9) are configured to be placed on the support surface (11) in combination, with the upper first seat squab (6) and the upper second seat squab (8) arranged to cover the remainder of the support surface (11).

6. A convertible seating arrangement (1) according to claim 1, in which the upper first seat squab (6) and/or the upper second seat squab (8) has two major surfaces arranged opposite one another and wherein, in the first mode, one of the major surfaces is arranged as an upward facing surface and, in the second mode, the other of the major surfaces is arranged as an upward facing surface.

7. A convertible seating arrangement (1) according to any preceding claim, in which, with the first and second seat squabs (4), (5) arranged in the first seating mode, an upper surface of the first and second seat squabs (4), (5) are covered by a first material covering and a lower surface of the first and second seat squabs (4), (5) are covered by a second material covering different to the first material covering.

8. A convertible seating arrangement (1) according to claim 7, in which the second material comprises a multi-layer material comprising at least a non-woven material layer, such as felt, and a mesh layer atop said non-woven material layer.

9. A convertible seating arrangement (1) according to claims 7, in which, the or each lower seat squab (7), (9) is covered at least in part by the second material covering and wherein the surfaces covered in the second material covering are configured to form an upward facing surface of the squabs in the second mode.

10. A convertible seating arrangement (1) according to any preceding claim, in which the first and/or second seat squab (4), (5) includes a knee roll (14) at an edge of the associated seat squab adjacent the space (105) when said seat squab is arranged in accordance with the first mode and;
when arranged in the second mode, said knee roll (14) is arranged at an outer edge of the support surface (11).

11. A convertible seating arrangement (1) according to claim 3, in which the first back rest squab (12) and/or the second back rest squab (13) are configured and arranged to substantially extend across a width of their associated seat squab (4), (5) and wherein the or each back rest squab (12), (13) comprises a plurality of scatter cushions.

12. A convertible seating arrangement (1) according to claim 2, in which the or each back rest squab (12), (13) have a softer bulk resilience than said first and/or second seat squabs (4), (5).

13. A vehicle (100) including the convertible seating arrangement (1) according to any preceding claim.

14. A vehicle (100) according to claim 13, in which the vehicle (100) comprises any one of a motorhome, a caravan, a boat, an aircraft, a van and a sports utility vehicle.

## Patentansprüche

1. Umwandelbare Sitzanordnung (1) für ein Fahrzeug, wobei die Anordnung zwischen einem ersten Modus und einem zweiten Modus umwandelbar ist, die Anordnung umfassend ein erstes Stützelement (2) und ein zweites Stützelement (3), die so angeordnet sind, dass sie einen Raum (105) dazwischen definieren, ein erstes Sitzteil (4) und ein zweites Sitzteil (5), wobei das erste Sitzteil (4) zwei Teile umfasst, die durch eine Trennung durch eine Ebene des ersten Sitzteils (4) ausgebildet sind, wobei die zwei Teile ein oberes erstes Sitzteil (6) und ein unteres erstes Sitzteil (7) umfassen, wobei das zweite Sitzteil (5) zwei Teile umfasst, die durch einen Spalt durch eine Ebene des zweiten Sitzteils (5) ausgebildet sind, wobei die zwei Teile ein oberes zweites Sitzteil (8) und ein unteres zweites Sitzteil (9) umfassen, wobei;
in dem ersten Modus, der einen Sitzmodus umfasst, das erste und das zweite Sitzteil (5), (6) konfiguriert sind, um auf den ersten und den zweiten Stützelementen (2), (3) angeordnet zu sein, beziehungsweise um zwei gegenüberliegende Sitzbereiche zu definieren; und
in dem zweiten Modus, ein drittes Stützelement (10) bereitgestellt ist, um sich in dem Raum (105) zwischen dem ersten und dem zweiten Stützelement (2), (3) zu erstrecken und damit eine fortlaufende Stützoberfläche (11) zu definieren, wobei das obere erste Sitzteil (6), das obere zweite Sitzteil (8), das untere erste Sitzteil (7) und das untere zweite Sitzteil (9) konfiguriert sind, um das erste, zweite und dritte Stützelement (2), (3), (10) der Stützoberfläche (11) zu bedecken, wobei zwei der vier Sitzteile zur Bereitstellung einer Schlafoberfläche zusammen übereinander angeordnet sind.

2. Umwandelbare Sitzanordnung (1) nach Anspruch 1, wobei in dem ersten Modus die Anordnung ein erstes Rückenlehnenteil (12) beinhaltet, das dem ersten Sitzteil (4) zugehörig ist und angeordnet ist, um eine Rückenlehne dafür auszubilden; und
die Anordnung ein zweites Rückenlehnenteil (13) beinhaltet, das dem zweiten Sitzteil (5) zugehörig ist und angeordnet ist, um eine Rückenlehne dafür auszubilden; und
in dem zweiten Modus, das erste und das zweite Rückenlehnenteil (12), (13) die Stützoberfläche (11) zum Bereitstellen der Schlafoberfläche nicht bedecken.

3. Umwandelbare Sitzanordnung (1) nach Anspruch 2, wobei das erste Rückenlehnenteil (12) und/oder das zweite Rückenlehnenteil (13) konfiguriert und angeordnet sind, um sich im Wesentlichen über eine Breite ihres zugehörigen Sitzteils (4), (5) hinweg zu erstrecken und wobei das oder jedes Rückenlehnenteil (12), (13) aus zwei oder mehr separaten Teilstücken besteht.

4. Umwandelbare Sitzanordnung (1) nach Anspruch 1, wobei das erste Sitzteil (4) derart konfiguriert ist, dass das obere und das untere erste Sitzteil (6), (7) unterschiedliche Dicken aufweisen, und das zweite Sitzteil (5) derart konfiguriert ist, dass das obere und das untere zweite Sitzteil (8), (9) unterschiedliche Dicken aufweisen, wobei die Dicken derart sind, dass eine Kombination von zwei der vier Sitzteile und den verbleibenden zwei Sitzteilen beim Auflegen auf das erste, zweite und dritte Stützelement (2), (3), (10) eine im Wesentlichen flache Schlafoberfläche bereitstellen.

5. Umwandelbare Sitzanordnung (1) nach einem vorhergehenden Anspruch, wobei das untere erste Sitzteil (7) und das untere zweite Sitzteil (9) konfiguriert sind, um in Kombination auf der Stützoberfläche (11) aufgelegt zu werden, wobei das obere erste Sitzteil (6) und das obere zweite Sitzteil (8) angeordnet sind, um den Rest der Stützoberfläche (11) zu bedecken.

6. Umwandelbare Sitzanordnung (1) nach Anspruch 1, wobei das obere erste Sitzteil (6) und/oder das obere zweite Sitzteil (8) zwei einander gegenüberliegende Hauptoberflächen aufweisen und wobei in dem ersten Modus eine der Hauptoberflächen als nach oben gerichtete Oberfläche angeordnet ist, und in dem zweiten Modus die andere der Hauptoberflächen als nach oben gerichtete Oberfläche angeordnet ist.

7. Umwandelbare Sitzanordnung (1) nach einem vorhergehenden Anspruch, wobei, wenn das erste und das zweite Sitzteil (4), (5) in dem ersten Sitzmodus angeordnet sind, eine obere Oberfläche des ersten und des zweiten Sitzteils (4), (5) mit einer ersten Materialbedeckung bedeckt sind, und eine untere Oberfläche des ersten und des zweiten Sitzteils (4), (5) mit einer zweiter Materialbedeckung bedeckt sind, die sich von der ersten Materialbedeckung unterscheidet.

8. Umwandelbare Sitzanordnung (1) nach Anspruch 7, wobei das zweite Material ein Mehrschichtmaterial umfasst, das wenigstens eine Vliesmaterialschicht wie etwa Filz, und eine Maschenschicht auf der Vliesmaterialschicht umfasst.

9. Umwandelbare Sitzanordnung (1) nach Anspruch 7, wobei das oder jedes untere Sitzteil (7), (9) wenigstens teilweise durch die zweite Materialbedeckung bedeckt ist und wobei die mit der zweiten Materialbedeckung bedeckten Oberflächen konfiguriert sind, um in dem zweiten Modus eine nach oben gerichtete Oberfläche der Teile auszubilden.

10. Umwandelbare Sitzanordnung (1) nach einem vorhergehenden Anspruch, wobei das erste und/oder das zweite Sitzteil (4), (5) eine Knierolle (14) an einer Kante des zugehörigen Sitzteils angrenzend an den Raum (105) beinhalten, wenn das Sitzteil gemäß dem ersten Modus angeordnet ist und;
wenn es in dem zweiten Modus angeordnet ist, die Knierolle (14) an einer äußeren Kante der Stützoberfläche (11) angeordnet ist.

11. Umwandelbare Sitzanordnung (1) nach Anspruch 3, wobei das erste Rückenlehnenteil (12) und/oder das zweite Rückenlehnenteil (13) konfiguriert und angeordnet sind, um sich im Wesentlichen über eine Breite ihres zugehörigen Sitzteils (4), (5) hinweg zu erstrecken und wobei das oder jedes Rückenlehnenteil (12), (13) eine Vielzahl von Zierkissen umfasst.

12. Umwandelbare Sitzanordnung (1) nach Anspruch 2, wobei das oder jedes Rückenlehnenteil (12), (13) eine weichere Volumenelastizität als das erste und/oder das zweite Sitzteil (4), (5) aufweist.

13. Fahrzeug (100), das die umwandelbare Sitzanordnung (1) nach einem vorhergehenden Anspruch beinhaltet.

14. Fahrzeug (100) nach Anspruch 13, wobei das Fahrzeug (100) eines von einem Wohnmobil, einem Wohnwagen, einem Boot, einem Luftfahrzeug, einem Kleinbus oder einem Sport-Utility-Vehicle umfasst.

## Revendications

1. Agencement de sièges convertibles (1) pour un véhicule, l'agencement étant convertible entre un premier mode et un second mode, l'agencement comprenant un premier élément de support (2) et un deuxième élément de support (3) agencés pour définir un espace (105) entre eux, un premier coussin de siège (4) et un second coussin de siège (5), et dans lequel le premier coussin de siège (4) comprend deux parties formées par une fente à travers un plan du premier coussin de siège (4), les deux parties comprenant un premier coussin de siège supérieur (6) et un premier coussin de siège inférieur (7), et dans lequel le second coussin de siège (5) comprend deux parties formées par une fente à travers un plan du second coussin de siège (5), les deux parties comprenant un second coussin de siège supérieur (8) et second coussin de siège inférieur (9), dans lequel ;
dans le premier mode, comprenant un mode d'assise, les premier et second coussins de siège (5), (6) sont conçus pour être agencés sur les premier et deuxième éléments de support (2), (3) respectivement pour définir deux zones d'assise se faisant face ; et
dans le second mode, un troisième élément de support (10) est prévu pour s'étendre dans l'espace (105) entre les premier et deuxième éléments de support (2), (3) et définir avec ceux-ci une surface de support continue (11), le premier coussin de siège supérieur (6), le second coussin de siège supérieur (8), le premier coussin de siège inférieur (7) et le second coussin de siège inférieur (9) étant conçus pour être agencés de manière à couvrir les premier, deuxième et troisième éléments de support (2), (3), (10) de la surface de support (11), deux des quatre coussins de siège étant placés ensemble l'un sur l'autre pour fournir une surface de couchage.

2. Agencement de sièges convertibles (1) selon la revendication 1, dans lequel, dans le premier mode, l'agencement comporte un premier coussin de dossier (12) associé au premier coussin de siège (4) et agencé pour former un dossier pour celui-ci ; et
l'agencement comporte un second coussin de dossier (13) associé au second coussin de siège (5) et agencé pour former un dossier pour celui-ci ; et
dans le second mode, les premier et second coussins de dossier de siège (12), (13) ne sont pas présents pour couvrir la surface de support (11) destinée à fournir la surface de couchage.

3. Agencement de sièges convertibles (1) selon la revendication 2, dans lequel le premier coussin de dossier (12) et/ou le second coussin de dossier (13) sont conçuset agencés pour s'étendre sensiblement sur une largeur de leur coussin de siège associée (4), (5) et dans lequel le ou chaque coussin de dossier (12), (13) est constitué de deux ou plusieurs sections séparées.

4. Agencement de sièges convertibles (1) selon la revendication 1, dans lequel le premier coussin de siège (4) est conçu de telle sorte que les premiers coussins de siège (6), (7) supérieur et inférieur sont d'épaisseurs différentes et le second coussin de siège (5) est conçu de telle sorte que les seconds coussins de siège supérieur et inférieur (8), (9) sont d'épaisseurs différentes, les épaisseurs telles qu'une combinaison de deux des quatre coussins de siège et des deux coussins de siège restants fournissent, lorsqu'ils sont placés sur les premier, deuxième et troisième éléments de support (2), (3), (10), une surface de couchage sensiblement plate.

5. Agencement de sièges convertibles (1) selon l'une quelconque des revendications précédentes, dans lequel le premier coussin de siège inférieur (7) et le second coussin de siège inférieur (9) sont conçus pour être placés sur la surface de support (11) en combinaison, avec le premier coussin de siège supérieur (6) et le second coussin de siège supérieur (8) agencés pour couvrir le reste de la surface de support (11).

6. Agencement de sièges convertibles (1) selon la revendication 1, dans lequel le premier coussin de siège supérieur (6) et/ou le second coussin de siège supérieur (8) possède deux surfaces principales agencées en face l'une de l'autre et dans lequel, dans le premier mode, une des surfaces principales est agencée comme une surface orientée vers le haut et, dans le second mode, l'autre des surfaces principales est agencée comme une surface orientée vers le haut.

7. Agencement de sièges convertibles (1) selon l'une quelconque des revendications précédentes, dans lequel, avec les premier et second coussins de siège (4), (5) agencés dans le premier mode d'assise, une surface supérieure des premier et second coussins de siège (4), (5) sont couverts d'un premier revêtement de matériau et une surface inférieure des premier et second coussins de siège (4), (5) sont couverts d'un second revêtement de matériau différent du premier revêtement de matériau.

8. Agencement de sièges convertibles (1) selon la revendication 7, dans lequel le second matériau comprend un matériau multicouche comprenant au moins une couche de matériau non tissé, tel que du feutre, et une couche de maille au-dessus de ladite couche de matériau non tissé.

9. Agencement de sièges convertibles (1) selon la revendication 7, dans lequel le ou chaque coussin de siège inférieur (7), (9) est couvert au moins en partie par le second revêtement de matériau et dans lequel les surfaces couvertes dans le second revêtement de matériau sont conçues pour former une surface des coussins orientée vers le haut dans le second mode.

10. Agencement de sièges convertibles (1) selon l'une quelconque des revendications précédentes, dans lequel le premier et/ou le second coussin de siège (4), (5) comporte un rouleau pour genoux (14) au niveau d'un bord du coussin de siège associé adjacent à l'espace (105) lorsque ledit coussin de siège est agencé conformément au premier mode et ;
lorsqu'il est agencé dans le second mode, ledit rouleau pour genoux (14) est agencé au niveau d'un bord externe de la surface de support (11).

11. Agencement de sièges convertibles (1) selon la revendication 3, dans lequel le premier coussin de dossier (12) et/ou le second coussin de dossier (13) sont conçus et agencés pour s'étendre sensiblement sur une largeur de leur coussin de siège associé (4), (5) et dans lequel le ou chaque coussin de dossier (12), (13) comprend une pluralité de petits coussins.

12. Agencement de sièges convertibles (1) selon la revendication 2, dans lequel le ou chaque coussin de dossier (12), (13) présente une résilience à la masse plus souple que lesdits premier et/ou second coussins de siège (4), (5).

13. Véhicule (100) comportant l'agencement de sièges convertibles (1) selon l'une quelconque des revendications précédentes.

14. Véhicule (100) selon la revendication 13, dans lequel le véhicule (100) comprend l'un quelconque d'un camping-car, d'une caravane, d'un bateau, d'un avion, d'une camionnette et d'un véhicule sportif utilitaire.
